Europäisches Patentamt

European Patent Office

Office européen des brevets

(11) Publication number: **0 089 129**
**B1**

(12) **EUROPEAN PATENT SPECIFICATION**

(45) Date of publication of patent specification: **11.11.87**

(21) Application number: **83300961.6**

(22) Date of filing: **24.02.83**

(51) Int. Cl.⁴: **B 25 J 11/00**

(54) **A power transmission mechanism with a backlash regulator for industrial robots.**

(30) Priority: **12.03.82 JP 38064/82**

(43) Date of publication of application:
**21.09.83 Bulletin 83/38**

(45) Publication of the grant of the patent:
**11.11.87 Bulletin 87/46**

(84) Designated Contracting States:
**DE FR GB**

(56) References cited:
**DE-B-1 051 596**
**GB-A- 249 340**
**US-A-2 230 899**
**US-A-3 826 383**

(73) Proprietor: **FANUC LTD**
**3580, Shibokusa Aza-Komanba Oshino-mura**
**Minamitsuru-gun Yamanashi 401-05 (JP)**

(72) Inventor: **Nakashima, Seiichiro**
**5-3-22 Hinohonmachi**
**Hino-shi Tokyo (JP)**
Inventor: **Inaba, Hajimu**
**5-3-16 Asahigoaka**
**Hino-shi Tokyo (JP)**
Inventor: **Inagaki, Shigemi**
**3-6-12 Tokura**
**Kokubunji-shi Tokyo (JP)**

(74) Representative: **Allman, Peter John et al**
**MARKS & CLERK Suite 301 Sunlight House Quay**
**Street**
**Manchester M3 3JY (GB)**

Courier Press, Leamington Spa, England.

# Description

## Background of the Invention
### Field of the Invention

The present invention relates to a power transmission mechanism accommodated in industrial robots, more particularly, to an improvement in a power transmission mechanism of the type having a bevel gear engaging assembly therein.

### Description of the Prior Art

Conventional industrial robots are provided with a robot hand attached to the extremity of an arm by a wrist mechanism. A control device enables the industrial robots to function as manipulating devices, such conventional industrial robots are used, for example, to carry a workpiece between different desired positions or to assemble one workpiece on another.

In such robots, the movable units, such as the robot arm, the wrist mechanism, and the robot hand are driven by a drive source, i.e., a motor, through power transmission mechanisms. The accuracy of motion of each movable unit and, hence, the position accuracy of the robot hand arranged at the extremity of the arm therefore greatly depend on the accuracy of each power transmission mechanism.

When gear engaging assemblies are used in such power transmission mechanisms, see US—A—3 826 383, provision of a regulated backlash between meshing gears enables increased accuracy of motion and ensures smooth motion of the movable units, resulting in improved position accuracy of the robot hand. In order to provide the regulated amount of backlash, it is conventional to use a shim or shims having diverse thicknesses and to selectively assemble those shims into the gear engaging assembly during the assembly of the industrial robot. However, such backlash regulation using shims involves extremely complex assembly work. Therefore, it is strongly requested to develop an improved method for regulating backlash provided between meshing gears of the power transmission mechanism of industrial robots.

## Summary of the Invention

An object of the present invention is to provide a power transmission mechanism for industrial robots provided with a regulator to provide backlash between engaged gears, particularly, engaged bevel gears arranged in the power transmission mechanism.

In accordance with the present invention, there is provided a power transmission mechanism, accommodated in an industrial robot, comprising an assembly having a pair of engaged bevel gears, one being rotatable about a first axis and operatively connected to a drive source and the other being rotatable about a second axis perpendicular to the first axis and being connected to a moved element of the industrial robot. The power transmission mechanism further comprises a unit for adjustably axially moving one of the bevel gears, thereby providing a regulated amount of backlash between the above-mentioned bevel gear and other bevel gears, and a unit for fixing the axial movement of the bevel gear at a position where the regulated amount of backlash is provided between the bevel gear and other bevel gears.

## Brief Description of the Drawings

The present invention will be made more apparent from the ensuing description of an embodiment with reference to the accompanying drawings, wherein:

Fig. 1 is a perspective view of an example of an industrial robot accommodating therein a power transmission mechanism according to the present invention and

Fig. 2 is a partial cross-sectional view of a power transmsision mechanism according to an embodiment of the present invention.

## Description of the Preferred Embodiments

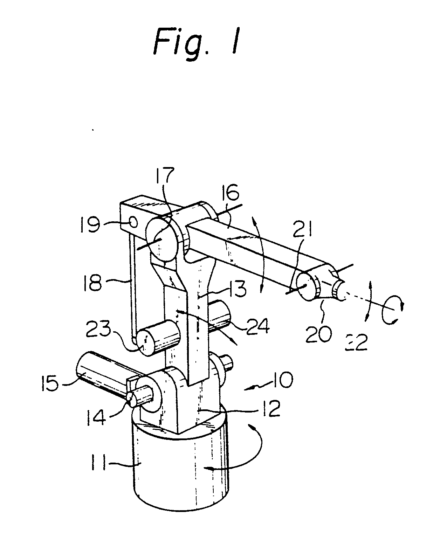

Referring to Fig. 1, an industrial robot 10 has a base 11 on which a swivel body 12 is mounted so as to be turnable about a vertical axis. The swivel body 12 is driven by a drive motor via a power transmission mechanism including a reduction gear. The drive motor and the power transmission mechanism are provided within the base 11.

A first arm 13 extending upward from the swivel body 12 is arranged to be turnable on a lateral shaft 14 between two positions to the sides of the illustrated upright position of the first arm 13. The turning motion of the first arm 13 is effected by a drive motor 15 via a power transmission mechanism accommodated in the swivel body 12.

A second arm 16 is arranged on the top of the first arm 13 so as to laterally extend and to be able to turn upward or downward about an axis 17. The turning motion of the second arm 16 is effected by a drive motor (not shown) attached to a part of the swivel body 12 via a power transmission mechanism formed as a movable linkage 18. One end of the linkage 18 is pivotally connected to the rear end of the second arm 16 at a position 19.

A wrist mechanism 20 is provided at the front end of the second arm 16. The wrist mechanism 20 is turnable up and down about an axis 21 and is provided, at the front end thereof, with a rotatable output end member 22. The turning motion of the wrist mechanism 20 and the rotating motion of the rotatable output end member 22 are effected by drive motors 23 and 24, respectively, via chain and sprocket mechanisms (not shown) and power transmission mechanisms arranged in the inside of the wrist mechanism 20. The drive motors 23 and 24 are mounted on both side faces of the first arm 13.

From the foregoing, it will be understood that the industrial robot of Fig. 1 is provided with a drive motor and a power transmission mechanism for each of the incorporated movable units. If it is necessary for any one of the power transmission mechanisms to be able to change direction of transmission, such power transmission mechanism has to include an engaged bevel gear assembly and, accordingly, a backlash regulator.

A power transmission mechanism including an engaged bevel gear assembly and a backlash regulator will be described hereinbelow with the case where the mechanism is accommodated in the wrist mechanism 20 of Fig. 1.

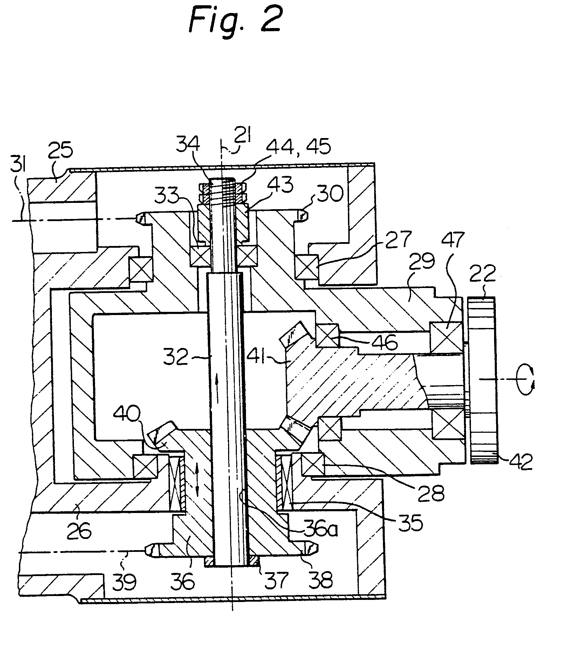

Referring to Fig. 2, a power transmission mechanism accommodated in the wrist mechanism 20 is held by an outer casing 25 and an inner casing 26 of the second arm 16. The power transmission mechanism includes a swing unit 29 rotatably supported by bearings 27 and 28 between the casings 25 and 26. The swing unit 29 is formed as a general hollow block and is provided, at one side thereof, with an integral sprocket wheel 30 having a swinging axis 21. The sprocket wheel 30 may be formed as a separated member and attached to the side of the swing unit 29. With the sprocket wheel 30 is engaged a chain 31 which transmits drive power from the drive motor 24 (Fig. 1) to the sprocket wheel 30 so that the swing unit 29 is turned about the swinging axis 21.

A shaft 32 is disposed in alignment with the swinging axis of the swing unit 29 and is supported at one end thereof by a bearing 33 mounted in the swing unit 29. The end of the shaft 32, supported by the bearing 33, is formed with an external thread 34. The shaft 32 extends across the swing unit 29 and has the other end fitted in a rotary block 36 which is rotatably supported by a bearing 35 mounted in the inner casing 26. A stopper 37 attached to the outermost end of the shaft 32 is provided so as to prevent the rotary block 36 from slipping out of the shaft 32. At this stage, it should be understood that the shaft 32 is tightly fitted in a bore 36a of the rotary block 36 by press fitting or wedging.

The rotary block 36 is formed, at the outer end thereof, with a sprocket wheel 38 around which a chain 39 is engaged so that the chain 39 transmits a drive force from the drive motor 23 (Fig. 1) to the rotary block 36. The sprocket wheel 38 may be a separate member fixed to the outer end of the rotary block 36. The rotary block 36 is formed with, at the inner end thereof, a bevel gear 40 which is concentric with the sprocket wheel 38. The bevel gear 40 may also be a separate member fixed to the inner end of the rotary block 36. The bevel gear 40 is engaged with another bevel gear 41 arranged at the inner end of an output shaft 22. The output shaft 22 having the bevel gear 41 also has at the outer end thereof an attachment flange 42 to which is attached a robot hand. The output shaft 22 per se is rotatably supported by bearings 46 and 47. Although the bevel gear 41, the attachment flange 42, and the body of the output shaft 22 are illustrated in Fig. 2 as being formed as one part, those elements may be separately formed for the purpose of facilitating the assembly of the entire wrist mechanism. In such a case, those elements will be fastened to each other by an appropriate fixing method.

Since the bevel gear 40 of the rotary block 36 and the bevel gear 41 of the output shaft 22 are engaged with one another, the output shaft 22 rotates when the rotary block 36 is driven due to the drive power transmitted through the chain 39 and the sprocket wheel 38. That is to say, the chain 39, the sprocket wheel 38, and the bevel gears 40 and 41 constitute a power transmission mechanism. Hence, provision of an appropriately regulated amount of backlash between the bevel gears 40 and 41 can ensure that the output shaft 22 rotates accurately and smoothly. In the embodiment of Fig. 2, a collar or spacing member 43 is fitted on the end having the external thread 34 of the shaft 32 to which the rotary block 36 is attached, and two screw nuts 44 and 45 are engaged with the external thread 34 in order to provide the regulated amount of backlash between the engaged bevel gears 40 and 41. The collar 43 is formed in a size and shape so that the inner end face thereof is seated against the bearing 33 mounted in the swing block 29 and that the outer end face thereof extends slightly over the external thread 34 of the shaft 32. The screw nuts 44 and 45 act as a double-nut locking means.

When the two screw nuts 44 and 45 are screwed in, the shaft 32 is drawn toward these screw nuts. Thus, the rotary block 36 fixed to the shaft 32 is moved in the same direction as the shaft 32, so that the backlash given between the bevel gears 40 and 41 is decreased. On the contrary, when the screw nuts 44 and 45 are screwed out, the shaft 32 together with the rotary block 36 are permitted to move in the opposite direction, so that the backlash given between the engaged bevel gears 40 and 41 can suitably be increased. That is to say, the external thread 34 formed in one end part of the shaft 32, the collar 43, and the screw nuts 44 and 45 threadedly engaged with the external thread 34 constitute a backlash regulating means capable of regulating the backlash given between the engaged bevel gears 40 and 41 by way of adjusting the movement of the bevel gear 40 in the axial direction of the shaft 32. At the same time, the two screw nuts 40 and 41 constitute a fastening means to maintain the engagement of the two bevel gears 40 and 41 with the regulated backlash therebetween.

Although the foregoing description is directed to the embodiment wherein a power transmission mechanism is accommodated in the wrist mechanism of an industrial robot, the same backlash regulation principle is applicable to other power transmission mechanisms of industrial robots if a bevel gear assembly is included in the power transmission mechanisms. Furthermore, according to the present invention, an appropriately regulated amount of backlash can be provided by suitably screwing the two screw nuts 44 and 45. Therefore, the backlash regulating work for each power transmission mechanism of an industrial robot is simplified and facilitated in assembly of the industrial robot, so that the efficiency of the robot-assembly work is increased and the performance of the industrial robot is improved.

**Claims**

1. A power transmission mechanism accommodated in an industrial robot, comprising
a casing means (25, 26);
a swing unit (29) arranged to be turnable in said casing means about a first axis (21);
a gear assembly rotatably held by said casing means and said swing unit, and having a pair of engaged first and second bevel gears, said first bevel gear (40) being rotatable about said first axis and said second bevel gear (41) being rotatable together with a moved element of the industrial robot (10) about a second axis perpendicular to said first axis, characterised in that there are provided:
a first chain and sprocket mechanism (30) (31) operatively connected to a first drive source for turning said swing unit;
a second chain and sprocket mechanism (38) (39) operatively connected to a second drive source for rotating said first bevel gear of said gear assembly;
means for adjustably axially moving said first bevel gear along said first axis to provide a selectively variable amount of backlash between said first and second bevel gears of said gear assembly;
means for fixing said first bevel gear of said gear assembly at a selected position along said first axis to provide a desired amount of backlash between said first and second bevel gears.

2. A power transmission mechanism according to claim 1, wherein said adjustably axially moving means and said fixing means are incorporated in a wrist mechanism (20) of said industrial robot (10).

3. A power transmission mechanism according to claim 1, wherein said adjustably axially moving means and said fixing means commonly comprise a double nut mechanism (44) (45) provided on a shaft (32) on which said first bevel gear of said pair of first and second bevel gears is fixedly mounted.

4. A power transmission mechanism according to claim 1, wherein said first and second chain and sprocket mechanisms are arranged in parallel with one another in said casing means.

**Patentansprüche**

1. Kraftübertragungsmechanismus in einem Industrieroboter, umfassend
eine Gehäuseanordnung (25) (26),
eine in der Gehäuseanordnung um eine erste Achse (21) drehbar angeordnete Schwenkeinheit (29),
eine von der Gehäuseanordnung und der Schwenkeinheit drehbar gehaltene Zahnradanordnung mit einem Paar in Eingriff stehender Kegelräder, umfassend ein erstes und ein zweites Kegelrad, von denen das erste Kegelrad (40) um die erste Achse drehbar ist und das zweite Kegelrad (41) zusammen mit einem bewegten Element des Industrieroboters (10) um eine zur ersten Achse senkrechte zweite Achse drehbar ist,
dadurch gekennzeichnet, daß vorgesehen sind:
ein erster Ketten- und Kettenrad-Mechanismus (30) (31), der betriebsmäßig zum Drehen der Schwenkeinheit mit einer Antriebsquelle verbunden ist,
ein zweiter Ketten- und Kettenrad-Mechanismus (38) (39), der betriebsmäßig zum Drehen des ersten Kegelrads der Zahnradanordnung mit einer zweiten Antriebsquelle verbunden ist,
eine Einrichtung zum justierbaren axialen Bewegen des ersten Kegelrads längs der ersten Achse zur Schaffung eines wahlweise veränderbaren Betrags vom Spiel zwischen dem ersten und dem zweiten Kegelrad der Zahnradanordnung,
eine Einrichtung zum Fixieren des ersten Kegelrads der Zahnradanordnung an einer ausgewählten Position längs der ersten Achse zur Schaffung eines gewünschten Betrags an Spiel zwischen dem ersten und dem zweiten Kegelrad.

2. Kraftübertragungsmechanismus nach Anspruch 1, bei dem die Einrichtung zur einstellbaren axialen Bewegung und die Einrichtung zum Fixieren in einem Handgelenkmechanismus (20) des Industrieroboters (10) untergebracht sind.

3. Kraftübertragungsmechanismus nach Anspruch 1, bei dem die Einrichtung zum justierbaren axialen Bewegen und die Einrichtung zum Fixieren gemeinsam einen Doppelmuttermechanismus (44) (45) umfassen, der auf einer Welle (32) vorgesehen ist, auf der das erste Kegelrad des Paares aus dem ersten und dem zweiten Kegelrad fest montiert ist.

4. Kraftübertragungsmechanismus nach Anspruch 1, bei dem der erste und der zweite Ketten- und Kettenrad-Mechanismus parallel zueinander in der Gehäuseanordnung angeordnet sind.

**Revendications**

1. Mécanisme de transmission de force logé dans un robot industriel, comprenant:
des moyens formant enveloppes (25, 26),
un élément oscillant (29) disposé de façon à pouvoir tourner dans les moyens formant enveloppes autour d'un premier axe (21),
un ensemble de pignons maintenus de manière rotative par les moyens formant enveloppes et l'élément oscillant, et comportant deux premier et second pignons coniques en prise l'un avec l'autre, le premier pignon conique 40 étant susceptible de tourner autour du premier axe et le second pignon conique (41) étant susceptible de tourner autour d'un second axe perpendiculaire au premier axe en même temps qu'un élément actionné du robot industriel (10),
caractérisé en ce que l'on a prévu:

un premier mécanisme à pignon et chaîne (30, 31) relié partiellement à une première source de force propulsive pour faire tourner l'élément oscillant,

un second mécanisme à pignon et chaîne (38, 39) relié fonctionnellement à une seconde source de force propulsive pour faire tourner le premier pignon conique à l'ensemble de pignons coniques,

des moyens pour déplacer axialement de manière réglable le premier pignon conique le long du premier axe pour donner une valeur réglable sélectivement au jeu entre les premier et second pignons coniques de l'ensemble de pignons coniques,

des moyens pour fixer le premier pignon conique de l'ensemble de pignons coniques à une position choisie le long du premier axe pour donner au jeu entre les premier et second pignons coniques la valeur désirée.

2. Mécanisme de transmission de force conforme à la revendication 1, dans lequel les moyens pour déplacement axial de manière réglable et les moyens pour fixation sont incorporés dans un mécanisme formant poignet (20) du robot industriel (10).

3. Mécanisme de transmission de force conforme à la revendication 1, dans lequel les moyens pour déplacement axial de manière réglable et les moyens pour fixation comprennent en commun un mécanisme à double écrou (44, 45) prévu sur un arbre (32) sur lequel est monté de manière fixe le premier pignon conique des deux premier et second pignons coniques.

4. Mécanisme de transmission de force conforme à la revendication 1, dans lequel les premier et second mécanismes à pignon et chaîne sont disposés parallèlement l'un à l'autre dans les moyens formant enveloppes.

# Fig. 1

0 089 129

# Fig. 2

2